# EUROPEAN PATENT APPLICATION

(11) **EP 4 840 704 A1**
(43) Date of publication of application: **18.11.2026**
(21) Application number: 26175638.1
(22) Date of filing: 30.04.2026
(51) Int. Cl.: B60R 21/36, B60R 21/239

(54) **AIRBAG DEVICE**

(30) Priority: 16.05.2025 JP 2025082660
(71) Applicant: Toyoda Gosei Co., Ltd., Kiyosu-shi, Aichi 452-8564 (JP)
(72) Inventor: KASHIO, Atsushi, Kiyosu-shi, Aichi-ken, 452-8564 (JP); NITAYAMA, Ken, Kiyosu-shi, Aichi-ken, 452-8564 (JP)
(74) Representative: Kramer Barske Schmidtchen Patentanwälte PartG mbB

(57) **Abstract**

An airbag (30) includes a protective inflation portion (31), a gas discharge portion (52) capable of discharging an inflation gas when a person to be protected is received, and a restricting member (62) that closes the gas discharge portion before reception of the person to be protected. The protective inflation portion is formed into a bag shape by joining outer peripheral edges (32a,33a) of the proximal-side wall portion (32) and the distal-side wall portion (33) to each other, and the gas discharge portion is disposed on an outer peripheral edge side and includes an opening body (53) and a pressed-contact portion (55) extending from a peripheral edge of the opening body. The restricting member includes a longitudinal coupling portion (63), and a pair of lateral coupling portions (64A,64B), and the pressed-contact portion can be extended outward by causing the longitudinal coupling portion to become slack upon contact with the person to be protected.

## Description

### BACKGROUND

### 1. TECHNICAL FIELD

The present disclosure relates to an airbag device mounted on a vehicle and including an airbag that inflates to enable protection of a person to be protected.

### 2. DESCRIPTION OF RELATED ART

Conventionally, as shown in JP 2015-160528 A, there has been an airbag device configured to be mounted on a steering wheel and provided with an airbag that protects a driver as a person to be protected. In this conventional airbag device, the airbag is formed into a bag shape by joining outer peripheral edges of a proximal-side wall portion disposed on the driver side upon completion of inflation and a distal-side wall portion disposed to face the proximal-side wall portion. The airbag includes a gas discharge portion capable of discharging an inflation gas that has flowed into the airbag when the airbag receives the driver. In this conventional airbag, a tether coupling the proximal-side wall portion and the distal-side wall portion is disposed inside. The airbag is configured to discharge the inflation gas from the gas discharge portion by utilizing slack occurring in the tether when the airbag receives the driver upon completion of inflation.

However, in the conventional airbag device, the gas discharge portion is formed by cutting out a part of the proximal-side wall portion. Therefore, there have been cases in which the conventional airbag has been difficult to apply to an airbag that completes inflation by coming into contact with vehicle-body-side members over a wide range (by bringing the proximal-side wall portion into contact with vehicle-body-side members over a wide range).

### SUMMARY

An airbag device according to the present disclosure is an airbag device mounted on a vehicle, the airbag device including
an airbag that inflates to enable protection of a person to be protected,
wherein
the airbag includes
a protective inflation portion formed in a bag shape and formed of a flexible sheet body, the protective inflation portion being capable of protecting the person to be protected upon completion of inflation,
a gas discharge portion capable of discharging an inflation gas that has flowed into the protective inflation portion when the person to be protected is received, and
a restricting member disposed in the protective inflation portion and capable of maintaining a closed state of the gas discharge portion in a state before the person to be protected is received,
the protective inflation portion includes a proximal-side wall portion disposed on a side of the person to be protected and a distal-side wall portion disposed to face the proximal-side wall portion upon completion of inflation, and the protective inflation portion is formed into a bag shape by joining outer peripheral edges of the proximal-side wall portion and the distal-side wall portion to each other,
the gas discharge portion includes
an opening body formed to provide a gap in a part of an outer peripheral edge joint portion constituting an outer peripheral edge of the protective inflation portion, and
a pressed-contact portion that is formed to extend from a peripheral edge of the opening body and is capable of maintaining a closed state of the opening body upon completion of inflation of the protective inflation portion by being pressed into mutual contact by the inflation gas that has flowed into the protective inflation portion in a state where the pressed-contact portion is drawn into the protective inflation portion by the restricting member,
the restricting member is formed of an elongated body having flexibility, and includes
a longitudinal coupling portion disposed to couple the proximal-side wall portion and the distal-side wall portion in a contact region of the person to be protected, and
a pair of lateral coupling portions arranged to extend from a vicinity of a center of the longitudinal coupling portion toward the gas discharge portion, each of the lateral coupling portions having a distal end side joined to a distal end of the pressed-contact portion, and
the restricting member is configured to maintain a drawn-in state of the pressed-contact portion by each of the lateral coupling portions in a state before reception of the person to be protected upon completion of inflation of the protective inflation portion, and to extend the pressed-contact portion outward by causing the longitudinal coupling portion to become slack upon contact with the person to be protected.

In the airbag device according to the present disclosure, the gas discharge portion is provided in the protective inflation portion that receives the person to be protected in the airbag, and the gas discharge portion is disposed in a region of the outer peripheral edge joint portion that joins the outer peripheral edges of the proximal-side wall portion and the distal-side wall portion in the protective inflation portion to each other. That is, in the airbag device according to the present disclosure, the gas discharge portion is disposed in a region on the outer peripheral edge side of the protective inflation portion. Therefore, for example, even when the airbag upon completion of inflation is mounted at a position where the airbag is disposed in contact with vehicle-body-side members over a wide range, the inflation gas can be smoothly discharged from the gas discharge portion when the person to be protected is received by the protective inflation portion.

Specifically, the gas discharge portion includes an opening body formed to provide a gap in a part of an outer peripheral edge joint portion constituting the outer peripheral edge of the protective inflation portion, and a pressed-contact portion extending from the peripheral edge of the opening body. In a state before the person to be protected is received upon completion of inflation of the protective inflation portion, the gas discharge portion is maintained in a closed state by the restricting member disposed in the protective inflation portion, by drawing the pressed-contact portion into the protective inflation portion while pressing the pressed-contact portion into mutual contact. The restricting member includes a longitudinal coupling portion disposed to couple the proximal-side wall portion and the distal-side wall portion in the contact region with which the person to be protected comes into contact, and a pair of lateral coupling portions extending from the vicinity of the center of the longitudinal coupling portion toward the gas discharge portion, and distal end sides of the pair of lateral coupling portions are joined to the distal end of the pressed-contact portion. In a state before the person to be protected is received, the pressed-contact portion is pulled inward by the pair of lateral coupling portions, so that the pressed-contact portion can be maintained in a pulled-in state within the protective inflation portion while being maintained in a pressed-contact state, and gas leakage from the gas discharge portion can be suppressed. Upon contact with the person to be protected, the protective inflation portion partially dents in the contact region so that the proximal-side wall portion approaches the distal-side wall portion. Then, slack occurs in the longitudinal coupling portion of the restricting member disposed in the dented region, the pressed-contact portion is extended outward, and the inflation gas is discharged from the opening body.

That is, in the airbag device according to the present disclosure, when the protective inflation portion receives the person to be protected upon completion of inflation of the airbag, slack occurs in the longitudinal coupling portion of the restricting member disposed between the proximal-side wall portion and the distal-side wall portion, and the gas discharge portion is opened to enable discharge of the inflation gas. Thus, even with the configuration in which the gas discharge portion is disposed on the outer peripheral edge side of the protective inflation portion, when the person to be protected is received, the inflation gas can be immediately discharged from the gas discharge portion, thereby enabling rapid and stable protection of the person to be protected.

Therefore, in the airbag device according to the present disclosure, even in the airbag configured to complete inflation in proximity to vehicle-body-side members, the inflation gas that has flowed into the airbag device can be smoothly discharged.

Further, in the airbag device according to the present disclosure, the pressed-contact portion preferably has a substantially cylindrical shape extending from the outer peripheral edge of the opening body. With such a configuration, upon completion of inflation of the airbag, it is possible to stably maintain a closed state of the gas discharge portion (opening body), the closed state being achieved by a pressed-contact state of the cylindrical pressed-contact portion, in a state before the person to be protected is received, that is, in a state where the pressed-contact portion is drawn into the protective inflation portion by the restricting member (it is possible to suppress formation of a gap around the opening body as much as possible). Therefore, leakage of the inflation gas from the gas discharge portion (opening body) can be accurately suppressed.

### BRIEF DESCRIPTION OF THE DRAWINGS

FIG. 1 is a plan view of a vehicle equipped with a pedestrian airbag device according to an embodiment of the present disclosure;
FIG. 2 is a schematic longitudinal sectional view showing the pedestrian airbag device according to the embodiment;
FIG. 3 is a plan view of an airbag used in the pedestrian airbag device according to the embodiment in a deployed flat state;
FIG. 4 is a bottom view of the airbag of FIG. 3;
FIG. 5 is a partially enlarged plan view showing a vicinity of a gas discharge portion in the airbag of FIG. 3;
FIG. 6 is a schematic plan view showing a state in which the airbag of FIG. 3 is inflated alone, and shows the vicinity of the gas discharge portion;
FIG. 7 is a schematic perspective view of the vicinity of the gas discharge portion as viewed from the inner side in a state where the airbag of FIG. 3 is inflated alone;
FIG. 8 is a plan view in which base materials constituting the airbag of FIG. 3 are arranged;
FIG. 9 is a schematic view showing a restricting member disposed in a bag body of the airbag of FIG. 3;
FIG. 10 is a schematic longitudinal sectional view showing a process of deployment and inflation of the airbag in the pedestrian airbag device according to the embodiment;
FIG. 11 is a plan view of the vehicle showing a state in which the airbag has completed inflation in the pedestrian airbag device according to the embodiment;
FIG. 12 is a schematic longitudinal sectional view showing a state in which the left airbag has completed inflation in the pedestrian airbag device according to the embodiment;
FIG. 13 is a schematic longitudinal sectional view showing a state in which a distal end of a restricting strap in the airbag is coupled to a case in the pedestrian airbag device according to the embodiment;
FIG. 14A is a partially enlarged schematic cross-sectional view showing a state before a pedestrian is received in the airbag upon completion of inflation in the pedestrian airbag device according to the embodiment, and FIG. 14B is a partially enlarged schematic cross-sectional view showing a state after the pedestrian is received; and
FIG. 15A is a partially enlarged perspective view schematically showing a state before the pedestrian is received in the airbag upon completion of inflation in the pedestrian airbag device according to the embodiment, and FIG. 15B is a partially enlarged perspective view schematically showing a state after the pedestrian is received.

### DESCRIPTION OF THE PREFERRED EMBODIMENTS

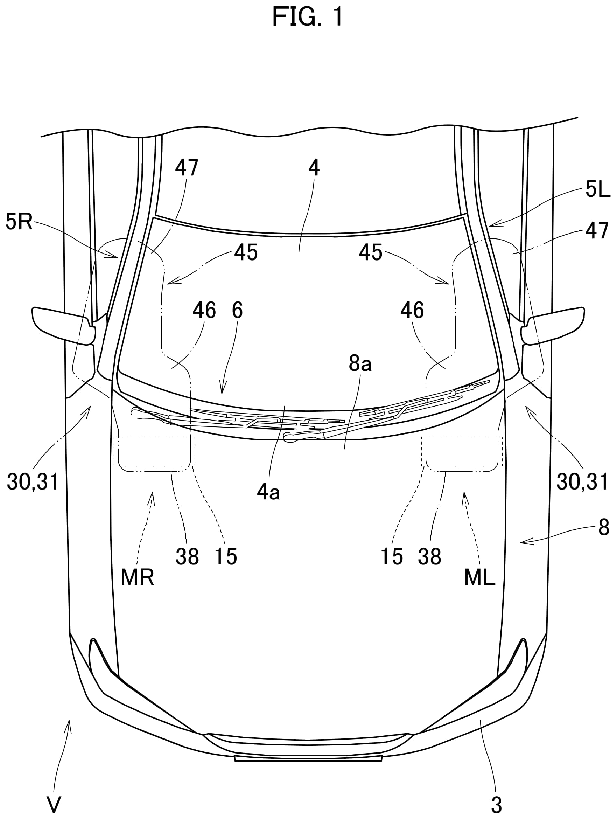

Hereinafter, an embodiment of the present disclosure will be described with reference to the drawings. In the embodiment, pedestrian airbag devices ML, MR will be described as an example of an airbag device. The pedestrian airbag devices ML, MR of the embodiment are for protecting a pedestrian P as a person to be protected. As shown in FIGS. 1, 2, 11, and 12, the pedestrian airbag devices ML, MR are mounted below the left and right end sides near a rear end 8a of a hood panel 8 of a vehicle V. In the present specification, unless otherwise specified, the front-rear, up-down, and left-right directions are described to correspond respectively to the front-rear, up-down, and left-right directions of the vehicle V.

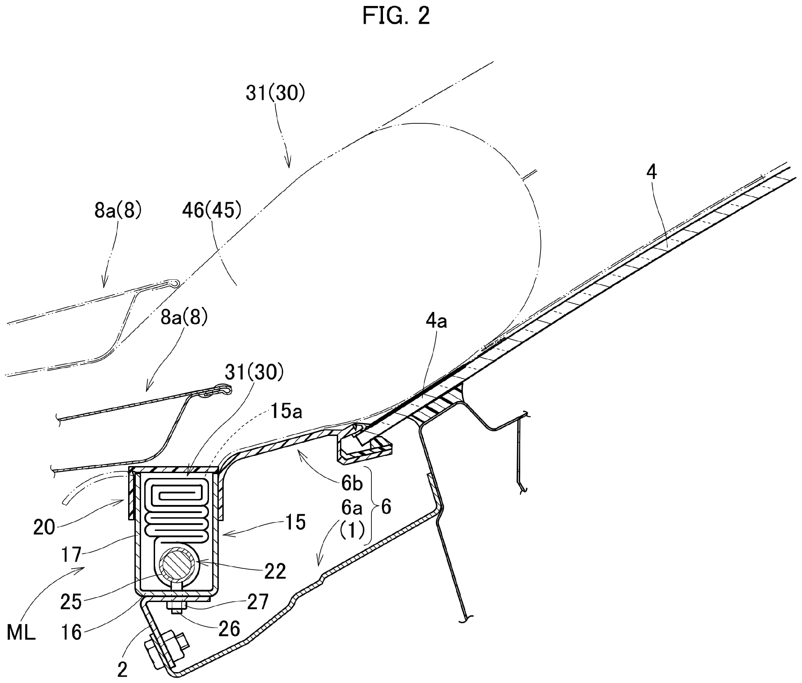

The two pedestrian airbag devices ML, MR have an identical configuration and are arranged symmetrically on the left and right sides. Accordingly, in the embodiment, the pedestrian airbag device ML disposed on the left side is taken as an example for description, and a detailed description of the pedestrian airbag device MR disposed on the right side is omitted. In the embodiment, during actuation of the pedestrian airbag devices ML, MR, the rear end 8a of the hood panel 8 is lifted upward by an actuator (not shown) (see FIGS. 2, 10, 12, 15A, and 15B).

As shown in FIGS. 1 and 2, the pedestrian airbag device ML is disposed adjacent to a cowl 6 that is a region rearward of an engine compartment (not shown). The pedestrian airbag device ML includes: an airbag 30; an inflator 22 that supplies an inflation gas to the airbag 30; a case 15 serving as a housing portion that accommodates the folded airbag 30 and the inflator 22; and an airbag cover 20 that covers the folded airbag 30. The cowl 6 includes a cowl panel 6a having high rigidity on the body 1 side and a cowl louver 6b made of synthetic resin above the cowl panel 6a. Specifically, the pedestrian airbag device ML is disposed adjacent to a position on the front side of the cowl louver 6b (see FIG. 2).

The case 15 serving as a housing portion is made of metal (sheet metal). The case 15 is fixed to a mounting portion 2 that includes a flange or the like extending from the cowl panel 6a on the body 1 side of the vehicle V, by using bolts 26 and nuts 27 of the mounting brackets 25 of the inflator 22 (see FIG. 2). The case 15 is formed in a substantially rectangular parallelepiped box shape having, on the upper end side, a protruding opening 15a for protrusion of the airbag 30 during inflation. The case 15 includes a bottom wall portion 16 having a substantially rectangular plate shape and extending substantially along the left-right direction (vehicle width direction) of the vehicle V, and a peripheral wall portion 17 having a substantially quadrangular cylindrical shape and extending upward from an outer peripheral edge of the bottom wall portion 16. The case 15 is disposed near the rear end 8a of the hood panel 8, specifically, on the front end side of the cowl 6 below the rear end 8a of the hood panel 8.

The airbag cover 20 is disposed so as to cover the protruding opening 15a of the case 15, to extend forward from the cowl louver 6b, and to be substantially flush with the cowl louver 6b. In the embodiment, the airbag cover 20 is mounted to a portion on the front side of the peripheral wall portion 17 in the case 15. The airbag cover 20 is pushed and opened by the airbag 30 when the airbag 30 accommodated in the case 15 inflates (see a two-dot chain line in FIG. 2, and FIGS. 10 and 12).

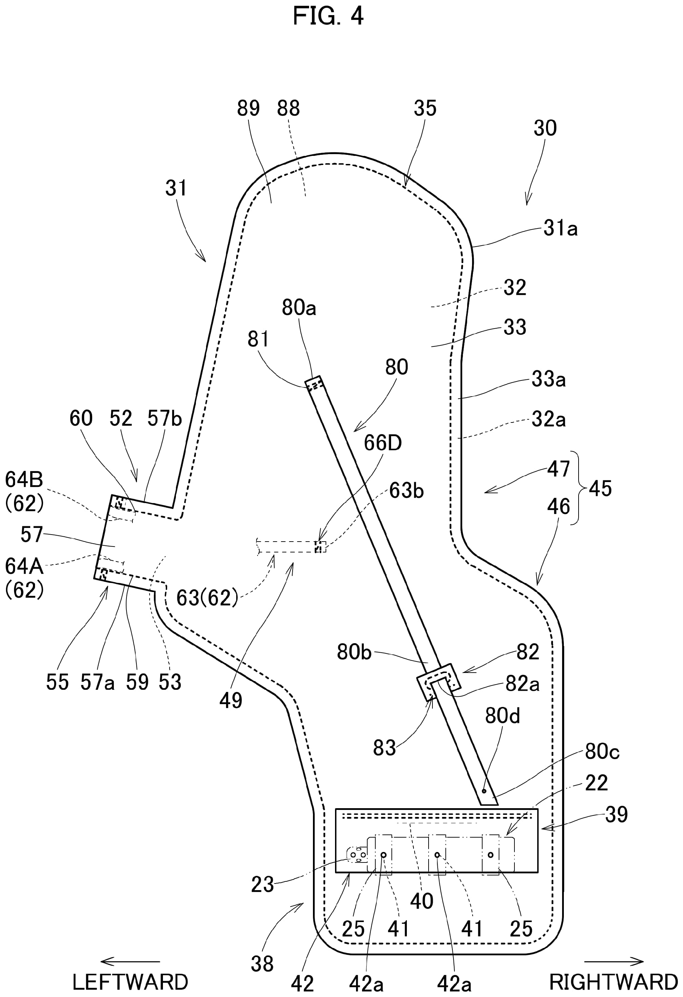

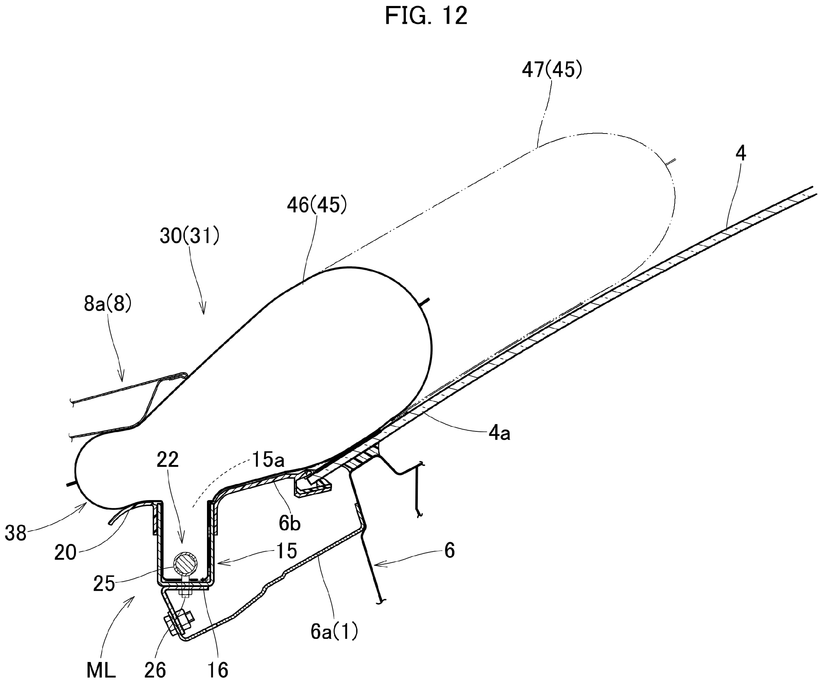

As shown in FIGS. 2 and 4, the inflator 22 is formed in a substantially cylindrical shape and is disposed such that the axial direction thereof extends substantially along the left-right direction (vehicle width direction) of the vehicle V. A gas discharge portion 23 that discharges an inflation gas is disposed on the distal end side (the left end side in the embodiment) of the inflator 22. In the embodiment, the outer peripheral side of the inflator 22 is held by a plurality of (three in the embodiment) mounting brackets 25, and the inflator 22 is inserted into the airbag 30 (specifically, into a case-side portion 38 described later). The inflator 22 is fixed to the bottom wall portion 16 of the case 15 by using the bolt 26 of the mounting bracket 25 (see FIG. 12). The outer peripheral side of the inflator 22 is covered with an inner tube (not shown). As described above, the bolt 26 of the mounting bracket 25 penetrates the bottom wall portion 16 and is fastened by the nut 27 to the mounting portion 2 on the body 1 side of the vehicle V, thereby fixing the case 15 together with the inflator 22 to the mounting portion 2 (see FIG. 2). Further, the inflator 22 is inserted into the airbag 30. Therefore, when the mounting bracket 25 is mounted to the mounting portion 2, the airbag 30 is also mounted and fixed to the bottom wall portion 16 of the case 15. Note that the inflator 22 is configured to be actuated when a sensor (not shown) provided on the front bumper 3 of the vehicle V detects a collision between the vehicle V and the pedestrian P.

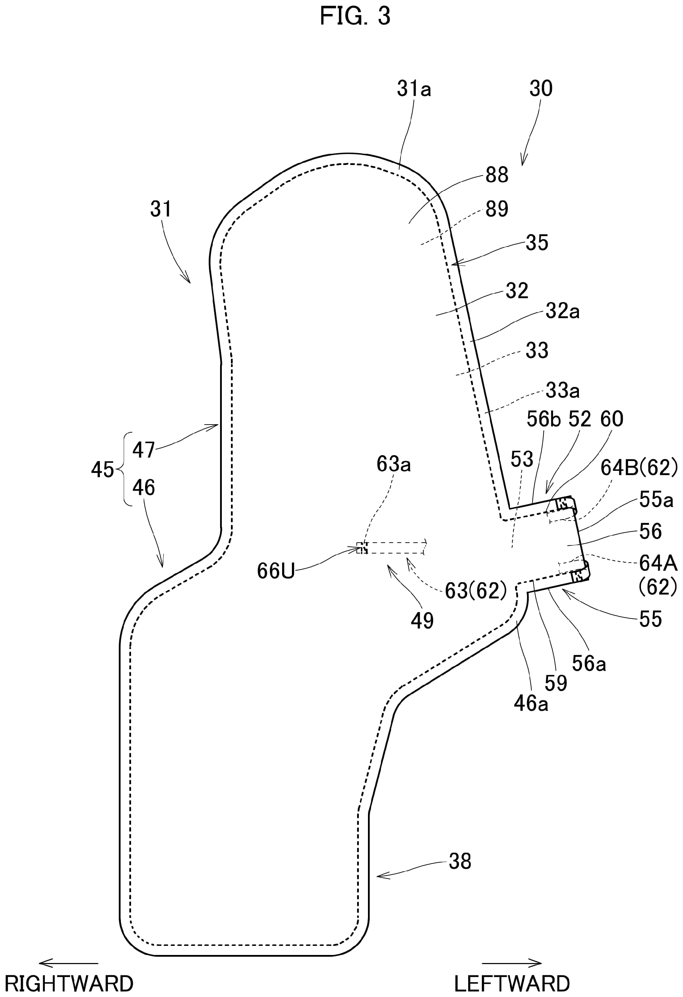

As shown in FIGS. 3 to 6, the airbag 30 includes a bag body 31 serving as a protective inflation portion that inflates by allowing an inflation gas to flow thereinto; a gas discharge portion 52 capable of discharging the inflation gas G that has flowed into the bag body 31 to the outside; a restricting member 62 disposed in the bag body 31 and capable of maintaining a closed state of the gas discharge portion 52; and a restricting strap 80 that restricts a deployed and inflated state of the bag body 31.

As shown by the two-dot chain line in FIGS. 1 and 2 and FIGS. 11 and 12, the bag body 31 serving as a protective inflation portion includes the case-side portion 38 and a protective body portion 45. The case-side portion 38 is a portion disposed from the case 15 side to the lower surface side of the rear end 8a of the hood panel 8 upon completion of inflation. The protective body portion 45 is a portion that is disposed to extend rearward from the case 15 upon completion of inflation and is capable of receiving the pedestrian P. In addition, as shown in FIGS. 3 and 4, the bag body 31 includes the following portions having substantially the same outer shapes: a pedestrian-side wall portion 32 (proximal-side wall portion) disposed on the upper surface side that is on the pedestrian P (person to be protected) side upon completion of inflation; and a vehicle-body-side wall portion 33 (distal-side wall portion) disposed on the lower surface side that is on the body 1 side, facing the pedestrian-side wall portion 32. The bag body 31 is formed into a bag shape by joining (sewing) outer peripheral edges 32a, 33a of the pedestrian-side wall portion 32 and the vehicle-body-side wall portion 33 (outer peripheral edges 88a, 89a of a pedestrian-side panel 88 and a vehicle-body-side panel 89 described later) to each other over substantially the entire circumference (over the entire circumference except for a region of an opening body 53 described later in the gas discharge portion 52). In the region of the bag body 31, a tether (not shown) is disposed at a predetermined position so as to couple the pedestrian-side wall portion 32 and the vehicle-body-side wall portion 33. The bag body 31 is configured to inflate in a substantially plate shape, with the separation distance between the pedestrian-side wall portion 32 and the vehicle-body-side wall portion 33 being restricted by such a tether.

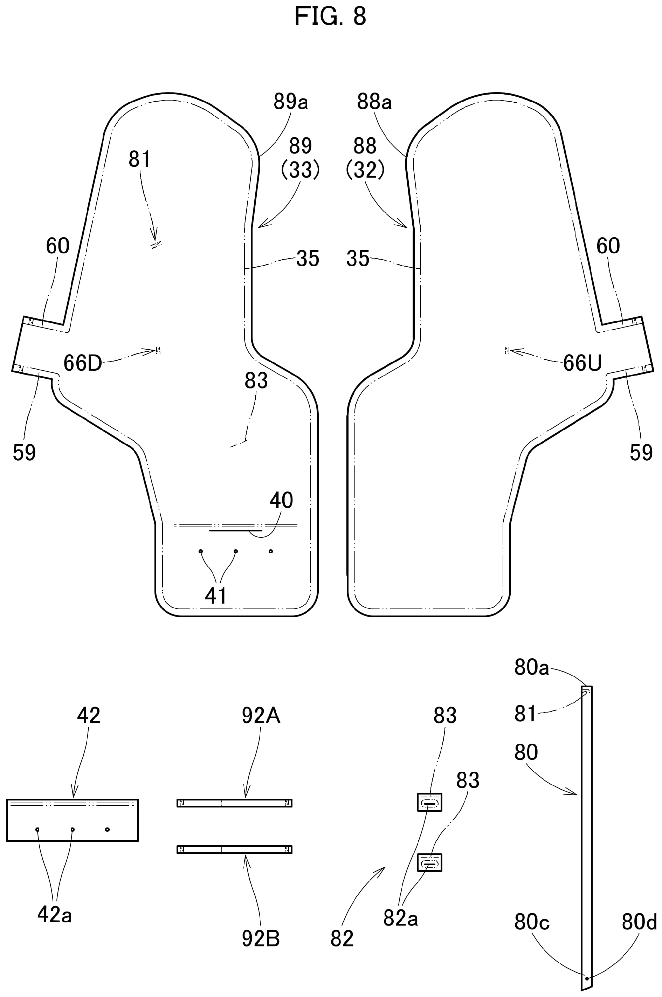

The case-side portion 38 is formed to extend forward from a cowl cover portion 46 described later in the protective body portion 45. A portion on the rear end side (protective body portion 45 side) upon completion of inflation of the case-side portion 38 is mounted to the case 15. The case-side portion 38 is configured to cover, upon completion of inflation, an area above a region on the front side from immediately above the case 15, that is, below the vicinity of the rear end 8a of the hood panel 8 (see FIG. 12). In the embodiment, the case-side portion 38 is formed to have a slightly narrower width (a width dimension in a left-right direction set to be smaller) than the cowl cover portion 46 in the protective body portion 45. An inner edge (a right edge in the embodiment) of the case-side portion 38 on the vehicle width direction side substantially coincides with an inner edge (right edge) of the cowl cover portion 46. In the embodiment, in the vehicle-body-side wall portion 33, an insertion opening 39 for inserting the inflator 22 thereinto is formed in a region constituting the rear end side of the case-side portion 38 (see FIG. 4). The insertion opening 39 includes an insertion slit 40 for inserting the inflator 22 into the airbag 30, three insertion holes 41 for insertion of the bolts 26 of the mounting brackets 25, and a lid panel 42 for closing the insertion slit 40 from the outer peripheral side. The insertion slit 40 is formed in a substantially linear shape extending substantially along the left-right direction. Three insertion holes 41 are formed in a region on the front side of the insertion slit 40 (see FIGS. 4 and 8). The lid panel 42 covers the outer surface side of the insertion slit 40. The rear edge side of the lid panel 42 is joined (sewn) to the vehicle-body-side wall portion 33 rearward of the insertion slit 40. On the front end side of the lid panel 42, three mounting holes 42a for protrusion of the bolts 26 of the mounting brackets 25 are provided corresponding to the insertion holes 41 (see FIGS. 4 and 8).

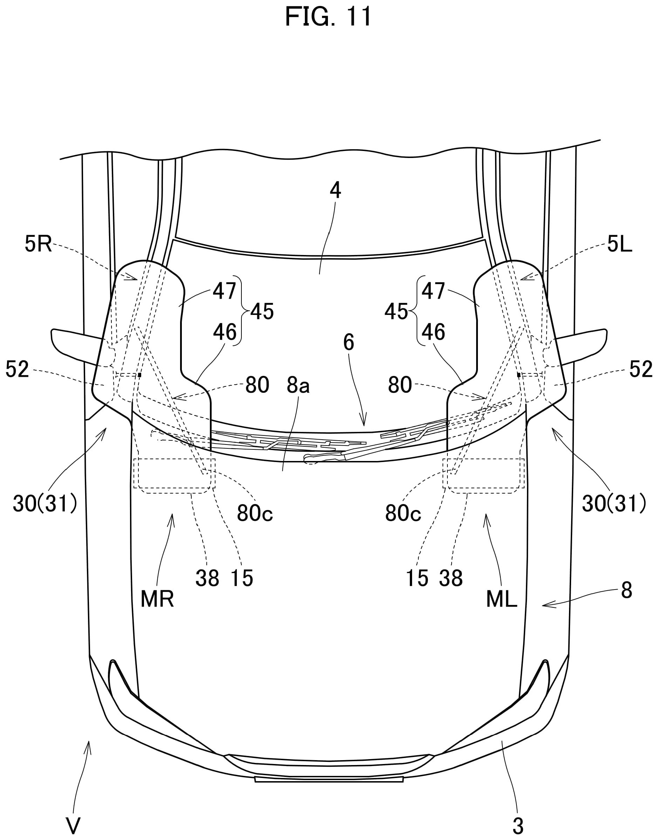

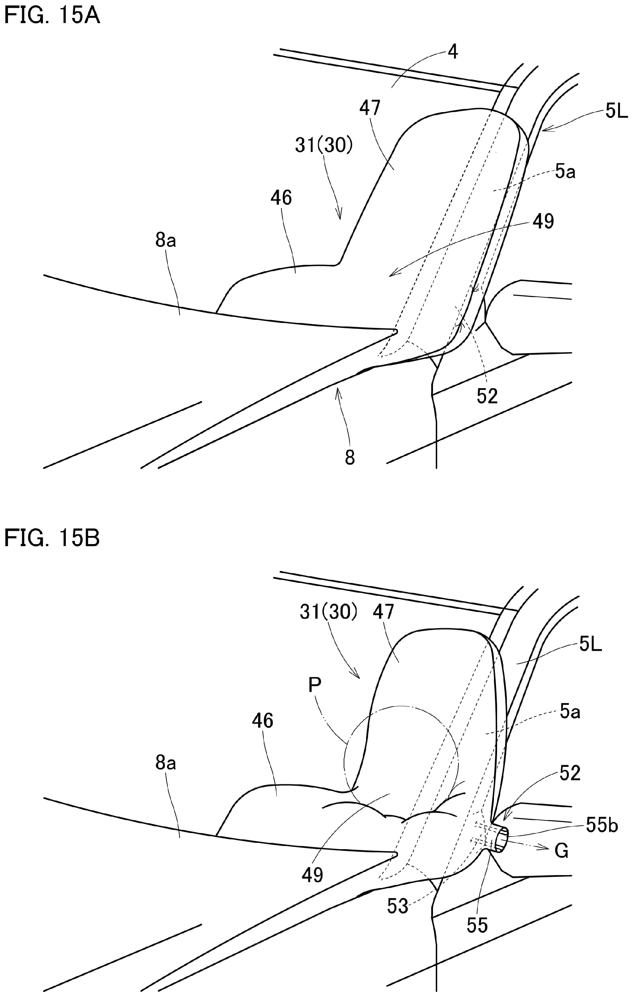

The protective body portion 45 covers a region near the hood panel 8 upon completion of inflation of the airbag 30. Specifically, as shown in FIGS. 11 and 15A, the protective body portion 45 is a portion that covers from the upper surface of the cowl 6 near the rear end 8a of the hood panel 8 to a front surface 5a (upper surface) of a front pillar 5L and is capable of receiving the pedestrian P as a person to be protected. Specifically, as shown in FIGS. 3 and 4, the protective body portion 45 is formed to extend rearward and leftward from the case-side portion 38 in a state where the airbag 30 is deployed flat. The protective body portion 45 includes a cowl cover portion 46 disposed behind the case-side portion 38 substantially along the left-right direction, and a pillar cover portion 47 extending rearward from the outer end (left end) of the cowl cover portion 46 in the vehicle width direction. In the embodiment, the cowl cover portion 46 is formed to extend only leftward (outward in the vehicle width direction) from the rear side of the case-side portion 38. The cowl cover portion 46 is configured to cover, upon completion of inflation of the airbag 30, the upper surface side near an end edge (left end) in the vehicle width direction of a portion mainly extending from the cowl 6 to the lower portion 4a of the front windshield 4, at the rear end 8a of the hood panel 8 (see FIGS. 11 and 12). The pillar cover portion 47 is configured to cover, upon completion of inflation of the airbag 30, substantially an entire region in the front-rear direction on the upper surface (front surface 5a side) side of the left front pillar 5L (see FIGS. 11 and 15A). In the embodiment, the pillar cover portion 47 is configured, in a state where the airbag 30 is deployed flat, to gradually reduce a width dimension such that a front end side on the case-side portion 38 side is wider and a rear end side is slightly narrower (see FIGS. 3 and 4).

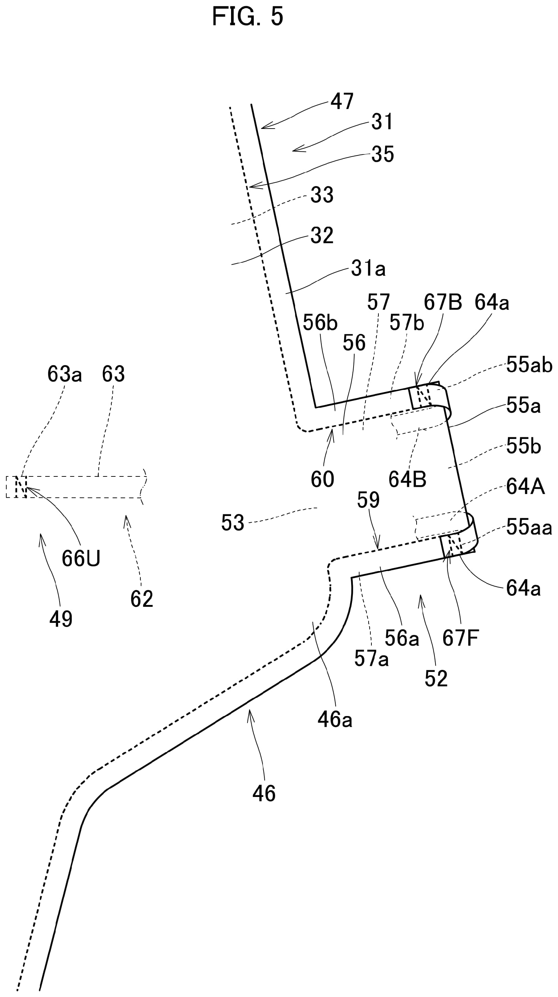

The gas discharge portion 52 is configured to open when the pedestrian P is received and to discharge the inflation gas G that has flowed into the bag body 31 serving as the protective inflation portion. In the embodiment, as shown in FIGS. 3 to 5, the gas discharge portion 52 is disposed at a position on the left edge side (the left end 46a side of the cowl cover portion 46) near the front end of the pillar cover portion 47. The gas discharge portion 52 includes an opening body 53 and a pressed-contact portion 55 formed to extend from the peripheral edge of the opening body 53. The opening body 53 is formed to provide a gap in a part of an outer peripheral edge joint portion 35 constituting an outer peripheral edge 31a of the bag body 31. In the embodiment, the pressed-contact portion 55 is formed in a cylindrical shape extending from the outer peripheral edge of the opening body 53. Specifically, the pressed-contact portion 55 is formed into a cylindrical shape having an open distal end 55a by sewing (joining), over an entire length, a front edge 56a side and a rear edge 56b side of a pedestrian-side portion 56 and a front edge 57a side and a rear edge 57b side of a vehicle-body-side portion 57, the pedestrian-side portion 56 and the vehicle-body-side portion 57 partially protruding respectively from the pedestrian-side wall portion 32 and the vehicle-body-side wall portion 33, in a state where the bag body 31 is deployed flat (see FIGS. 3 to 5). A front edge joint portion 59 and a rear edge joint portion 60 for sewing the front edge 56a side and the rear edge 56b side of the pedestrian-side portion 56 and the front edge 57a side and the rear edge 57b side of the vehicle-body-side portion 57 are formed to be continuous from the outer peripheral edge joint portion 35. That is, in the embodiment, the gap (opening) in the region on the base portion side between the front edge joint portion 59 and the rear edge joint portion 60 (near a boundary portion between the bag body 31 and the pressed-contact portion 55) constitutes the opening body 53 of the gas discharge portion 52. On the distal end 55a side of the pressed-contact portion 55 in the gas discharge portion 52, distal ends 64a of a pair of lateral coupling portions 64A, 64B described later in a restricting member 62 are joined (coupled) to form joint portions 67F, 67B, respectively. In the embodiment, the distal ends 64a of the lateral coupling portions 64A, 64B are coupled respectively to a front edge portion 55aa and a rear edge portion 55ab at the distal end 55a of the pressed-contact portion 55 (on a protruding end side in a state where the bag body 31 is deployed flat) (see FIG. 5).

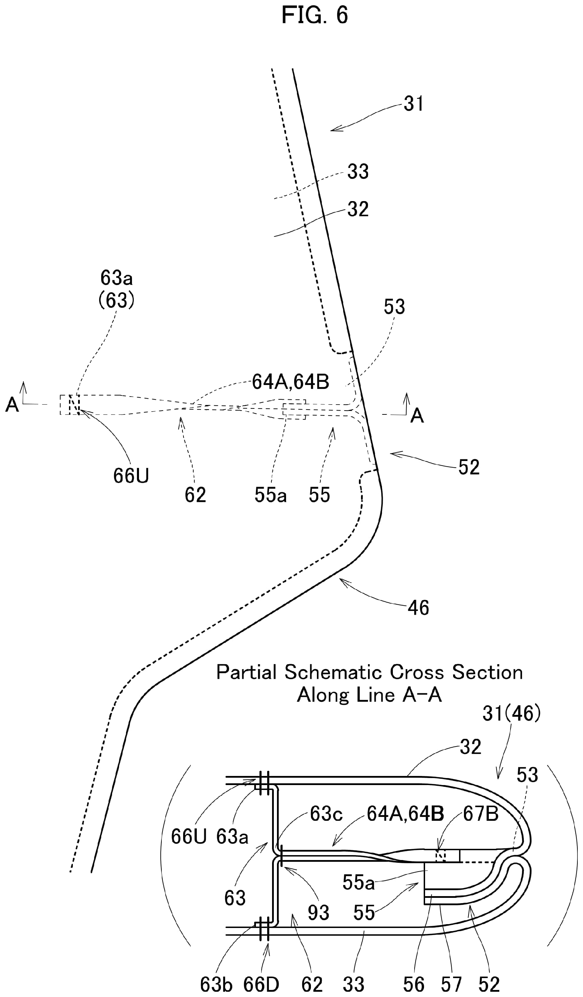

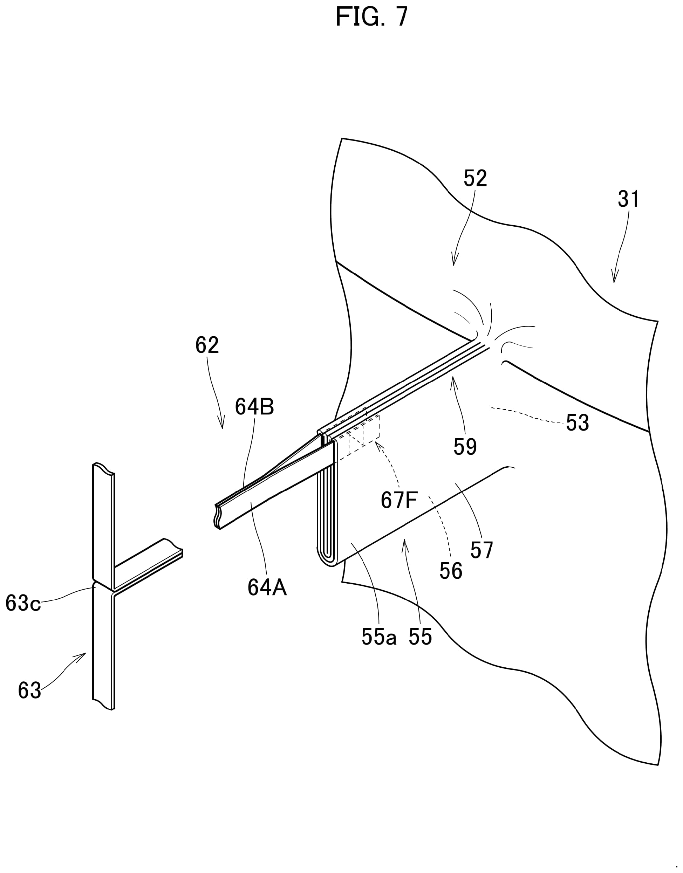

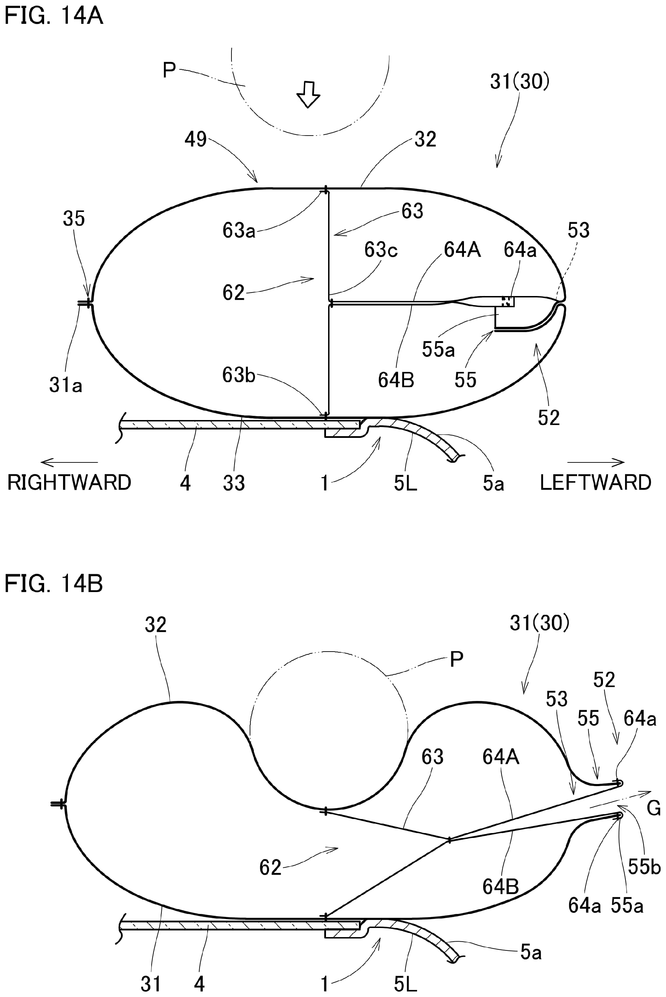

In a state before the pedestrian P is received upon completion of inflation of the airbag 30, the cylindrical pressed-contact portion 55 in the gas discharge portion 52 is disposed in a state where the pressed-contact portion 55 is drawn into the bag body 31 with the distal end 55a directed toward the inside of the bag body 31 by the restricting member 62 (see FIGS. 6, 7, and 14A). In the embodiment, the pressed-contact portion 55 is pressed by the inflation gas that has flowed into the bag body 31 while being pulled by the two lateral coupling portions 64A, 64B extending from the front edge portion 55aa and the rear edge portion 55ab at the distal end 55a. Therefore, the pressed-contact portion 55 is pulled by the two lateral coupling portions 64A, 64B arranged to be in contact with each other, and is folded in two to maintain the closed state of the opening body 53 (see FIGS. 6 and 7). When the pedestrian P is received upon completion of inflation of the airbag 30, restriction by the restricting member 62 is released, and the pressed-contact portion 55 is reversed while passing through the opening body 53 and protrudes to the outside of the bag body 31 (see FIGS. 14B and 15B). Then, the inflation gas G in the bag body 31 is discharged to the outside through the opening body 53 and an opening region 55b on the distal end 55a side of the pressed-contact portion 55.

The restricting member 62 is disposed in the bag body 31 and is formed of an elongated body having flexibility. As shown in FIGS. 6 and 14A, the restricting member 62 includes a longitudinal coupling portion 63 disposed to couple the pedestrian-side wall portion 32 and the vehicle-body-side wall portion 33, and the lateral coupling portions 64A, 64B extending from the vicinity of the center (central-side portion 63c) of the longitudinal coupling portion 63. The longitudinal coupling portion 63 is disposed in a contact region 49 of the bag body 31 with which the pedestrian P comes into contact. In the embodiment, the longitudinal coupling portion 63 is disposed in a region on the right side of the gas discharge portion 52. Specifically, in the bag body 31 of the embodiment, a region near the left-right center at a boundary portion between the cowl cover portion 46 and the pillar cover portion 47 is set as the contact region 49. In the contact region 49, the longitudinal coupling portion 63 is disposed to couple the pedestrian-side wall portion 32 and the vehicle-body-side wall portion 33 by joining (sewing) the end portions 63a and 63b to the pedestrian-side wall portion 32 and the vehicle-body-side wall portion 33 at joint portions 66U, 66D, respectively (see FIGS. 3 to 6). Each of the pair of lateral coupling portions 64A, 64B is disposed to extend leftward from a central-side portion 63c, which is a substantially central portion of the longitudinal coupling portion 63, toward the gas discharge portion 52 (see A in FIGS. 6 and 14). In the embodiment, as described above, the distal end 64a sides of the respective lateral coupling portions 64A, 64B are joined (sewn) to the front edge portion 55aa and the rear edge portion 55ab of the distal end 55a of the pressed-contact portion 55 in a deployed flat state at the joint portions 67F, 67B (see FIG. 5). The length dimension of the longitudinal coupling portion 63 is set to a dimension (a dimension smaller than the separation distance between the pedestrian-side wall portion 32 and the vehicle-body-side wall portion 33 in the bag body 31 in a state where the bag body 31 is inflated alone) such that the longitudinal coupling portion 63 can be disposed in a stretched state coupling the pedestrian-side wall portion 32 and the vehicle-body-side wall portion 33 while exerting tension upon completion of inflation of the bag body 31. The length dimension of each of the lateral coupling portions 64A, 64B is set to a dimension that enables the pressed-contact portion 55 of the gas discharge portion 52 to protrude to the outside of the bag body 31 while being reversed when slack in the longitudinal coupling portion 63 occurs upon contact with a pedestrian. Specifically, in the embodiment, the length dimension of the longitudinal coupling portion 63 and each of the lateral coupling portions 64A, 64B is set such that, when the thickness of the contact region 49 (a region in which the longitudinal coupling portion 63 is disposed) in the bag body 31 becomes about one-half due to contact with the pedestrian P, the entire pressed-contact portion 55 can be reversed and protrude from the bag body 31, and the inflation gas G can be discharged from the opening region 55b on the distal end 55a side of the reversed pressed-contact portion 55.

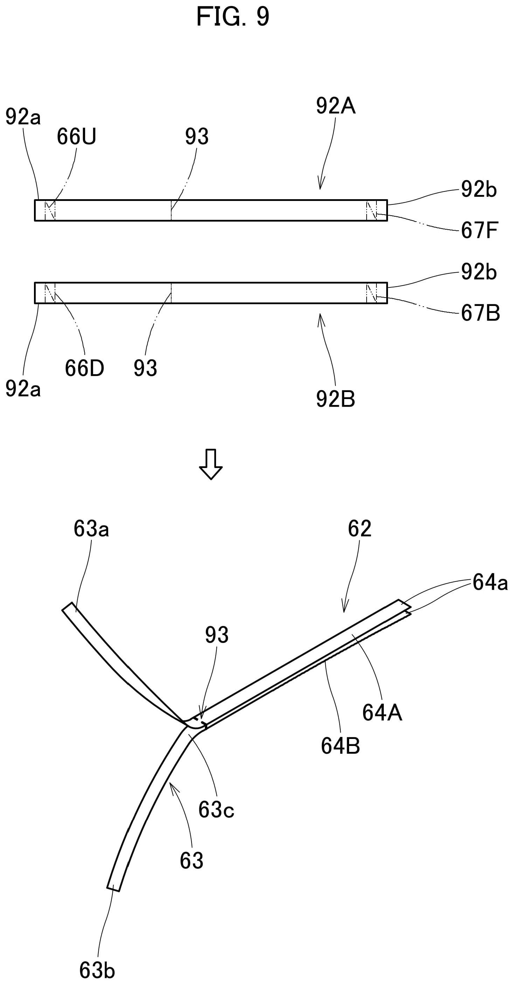

In the embodiment, the restricting member 62 includes a pair of restricting-member base materials 92A, 92B formed in an elongated shape as shown in FIGS. 8 and 9. The restricting member 62 is formed by joining (sewing) the intermediate portions of the restricting-member base materials 92A, 92B in a state where the restricting-member base materials overlap each other. In the embodiment, a joint portion 93 is formed at a position corresponding to about one-third of the length dimension of the restricting-member base materials 92A, 92B. A region (shorter region) from the joint portion 93 to an end portion 92a in the restricting-member base material 92A and a region (shorter region) from the joint portion 93 to an end portion 92a in the restricting-member base material 92B together constitute the longitudinal coupling portion 63. In the restricting-member base materials 92A, 92B, a remaining region (a region from the joint portion 93 to the end portion 92b, which is a longer region) constitutes each of the lateral coupling portions 64A, 64B (see FIG. 9).

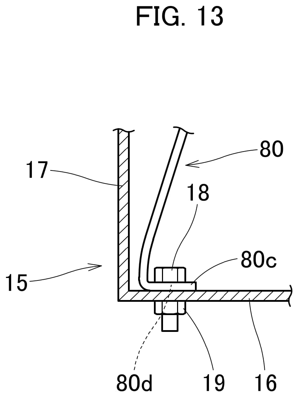

The restricting strap 80 is disposed on the rear surface side (vehicle-body-side wall portion 33 side) of the bag body 31, and is formed of an elongated body having flexibility. A base portion 80a side of the restricting strap 80 is joined to the vehicle-body-side wall portion 33. In the restricting strap 80, an intermediate portion 80b is inserted through a position restricting portion 82 provided on the vehicle-body-side wall portion 33 side of the bag body 31, whereby positional displacement relative to the bag body 31 is restricted. A distal end 80c side of the restricting strap 80 is mounted to the bottom wall portion 16 of the case 15 (see FIGS. 4 and 13). Specifically, the base portion 80a of the restricting strap 80 is joined (sewn) to the vehicle-body-side wall portion 33 by a joint portion 81 at a position that is substantially central in the front-rear and left-right directions of the pillar cover portion 47. The position restricting portion 82 is disposed in the vehicle-body-side wall portion 33 at a position near the center in the front-rear direction of the cowl cover portion 46 and slightly rightward of a left-right center (see FIG. 4). An insertion hole 82a through which the intermediate portion 80b of the restricting strap 80 can be inserted is formed in a slit shape in the position restricting portion 82. As shown in FIG. 8, the position restricting portion 82 is formed in a two-layered shape, and one side on a short-side direction is joined (sewn) to the vehicle-body-side wall portion 33 so as to form a joint portion 83 (see FIG. 4). The distal end 80c of the restricting strap 80 has a mounting hole 80d for insertion of a bolt 18. In the embodiment, the distal end 80c of the restricting strap 80 is mounted to the right end side of the bottom wall portion 16 of the case 15 by using the bolt 18 and a nut 19 (see FIG. 13). As shown in FIG. 11, the restricting strap 80 is disposed to be slightly inclined relative to the front-rear direction (the longitudinal direction of the pillar cover portion 47) so as to position the distal end 80c (front end) inward in the left- right direction in a state where the bag body 31 is viewed from above upon completion of inflation.

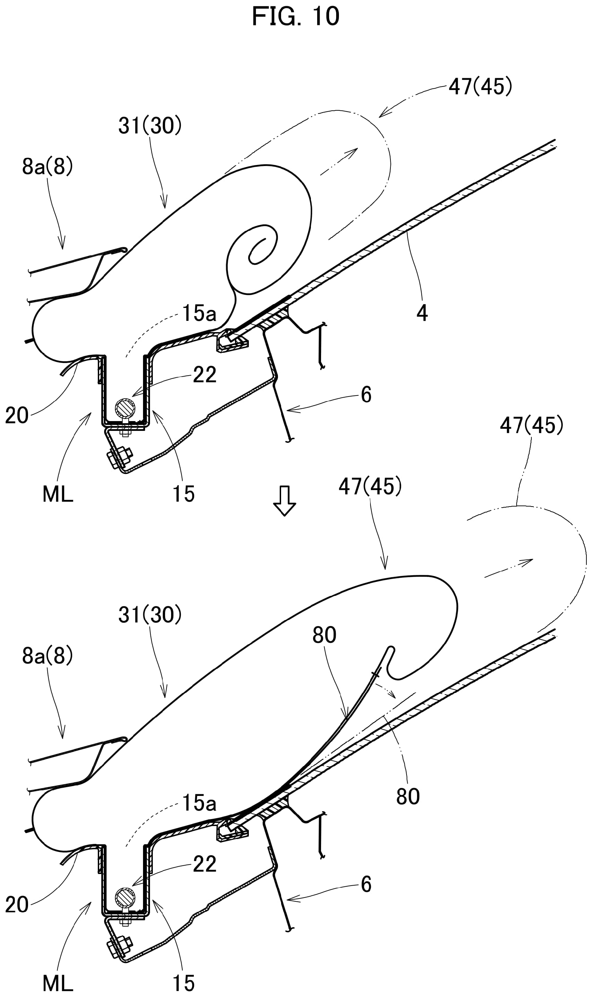

The restricting strap 80 is disposed to suppress excessive upward protrusion of the bag body 31 during deployment and inflation. The length dimension of the restricting strap 80 is set to be shorter than the separation distance between a joining point (the joint portion 81 for joining the base portion 80a of the restricting strap 80 to the vehicle-body-side wall portion 33) in the bag body 31 in a state where the bag body 31 is inflated alone and a portion on a right end side of the bottom wall portion 16 of the case 15. More specifically, the length dimension of the restricting strap 80 is set to such a dimension that the pillar cover portion 47 of the bag body 31 during deployment and inflation can be pulled toward the case 15 side (lifting of the pillar cover portion 47 away from the front pillar 5L can be suppressed) and smooth deployment and inflation of the bag body 31 is not hindered. With this restricting strap 80, the airbag 30 can suppress a large upward protrusion of the pillar cover portion 47 (separation from the front pillar 5L and the front windshield 4) during the initial stage of inflation, and can deploy the pillar cover portion 47 along the front windshield 4 (front pillar 5L) (see FIG. 10).

As shown in FIG. 8, the airbag 30 of the embodiment includes the pedestrian-side panel 88 constituting the pedestrian-side wall portion 32 and the pedestrian-side portion 56 of the pressed-contact portion 55 in the gas discharge portion 52, the vehicle-body-side panel 89 constituting the vehicle-body-side wall portion 33 and the vehicle-body-side portion 57 of the pressed-contact portion 55 in the gas discharge portion 52, the restricting-member base materials 92A, 92B constituting the restricting member 62, a restricting strap 80, and the position restricting portion 82. Each of the base materials is formed by cutting, into a predetermined shape, a coated fabric in which a coating agent for preventing gas leakage is applied to a surface of a woven fabric formed by weaving polyamide yarn, polyester yarn, or the like.

Mounting of a pedestrian airbag device ML of the embodiment on a vehicle V will be described. First, from a state in which the pressed-contact portion 55 of the gas discharge portion 52 is inserted into the bag body 31, the airbag 30 is folded so as to be accommodated in the case 15. At this time, the restricting strap 80 is folded together with the bag body 31 in a state where the intermediate portion 80b is inserted into the position restricting portion 82. In addition, the distal end 80c of the restricting strap 80 is arranged to protrude from the folded airbag 30. The inflator 22 to which the mounting bracket 25 has been assembled is inserted into the case-side portion 38 of the folded airbag 30 by using the insertion slit 40. Then, the bolt 26 of each mounting bracket 25 is caused to protrude from the insertion hole 41 of the airbag 30. Next, the lid panel 42 is closed to cover the insertion slit 40, and the bolt 26 is inserted into the mounting hole 42a. Thereafter, the airbag 30 and the inflator 22 are accommodated in the case 15, and the distal end 80c of the restricting strap 80 is fixed to the bottom wall portion 16 of the case 15 by using the bolt 18 and the nut 19. The airbag cover 20 is mounted to the case 15, and the bolt 26 protruding from the bottom wall portion 16 of the case 15 is fastened by the nut 27 to the mounting portion 2. When the inflator 22 is connected to an actuation circuit (not shown), the pedestrian airbag device ML can be mounted on the vehicle V. Similarly, the right pedestrian airbag device MR can be mounted on the vehicle V.

In the pedestrian airbag devices ML, MR of the embodiment, when an actuation circuit (not shown) detects a collision between the vehicle V and a pedestrian P (specifically, a pedestrian or a bicycle rider) based on an actuation signal from a sensor (not shown) disposed in the front bumper 3, each of the inflators 22, 22 is actuated. Then, the airbags 30, 30 allow an inflation gas to flow thereinto and inflate so as to cover, from near the left end or the right end on the rear end 8a side of the hood panel 8, to the upper surfaces (front surfaces 5a) of the front pillars 5L, 5R (see the two-dot chain lines in FIGS. 1 and 2, and FIGS. 11 and 12).

In the pedestrian airbag device ML (MR) of the embodiment, in the airbag 30, the gas discharge portion 52 is provided in the bag body 31 (protective inflation portion) that receives the pedestrian P as a person to be protected. In the bag body 31, the gas discharge portion 52 is disposed in a region of the outer peripheral edge joint portion 35 that couples the outer peripheral edges 32a, 33a of a pedestrian-side wall portion 32 (proximal-side wall portion) and the vehicle-body-side wall portion 33 (distal-side wall portion) (the outer peripheral edges 88a, 89a of the pedestrian-side panel 88 and the vehicle-body-side panel 89) to each other. That is, in the pedestrian airbag devices ML, MR of the embodiment, the gas discharge portion 52 is disposed in the region on the outer peripheral edge side of the bag body 31. Therefore, even with the configuration in which the airbag 30 upon completion of inflation is mounted at a position where the airbag 30 is disposed in contact with vehicle-body-side members, such as the front windshield 4 and the front pillars 5L, 5R, over a wide range, it is possible to smoothly discharge the inflation gas G from the gas discharge portion 52 when the pedestrian P is received by the bag body 31.

Specifically, the gas discharge portion 52 includes the opening body 53 formed to provide a gap in a part of an outer peripheral edge joint portion 35 constituting an outer peripheral edge 31a of the bag body 31 (protective inflation portion), and the pressed-contact portion 55 extending from the peripheral edge of the opening body 53. In a state before the pedestrian P is received upon completion of inflation of the bag body 31, the gas discharge portion 52 is maintained in a closed state by the restricting member 62 disposed in the bag body 31, by drawing the pressed-contact portion 55 into the bag body 31 while bringing the pressed-contact portion 55 into mutual contact (see FIG. 14A). The restricting member 62 includes a longitudinal coupling portion 63 disposed to couple the pedestrian-side wall portion 32 and the vehicle-body-side wall portion 33 in the contact region 49 with which the pedestrian P comes into contact, and a pair of lateral coupling portions 64A, 64B extending from the vicinity of the center (central-side portion 63c) of the longitudinal coupling portion 63 toward the gas discharge portion 52 side (left side), and the distal end 64a sides of the pair of lateral coupling portions 64A, 64B are joined to the distal end 55a of the pressed-contact portion 55. In a state before the pedestrian P is received, the pressed-contact portion 55 is pulled inward by the pair of lateral coupling portions 64A, 64B, so that the pressed-contact portion 55 can be maintained in a pulled-in state within the bag body 31 while being maintained in a pressed-contact state, and gas leakage from the gas discharge portion 52 can be suppressed (see FIGS. 14A, 15A). Upon contact with the pedestrian P, as shown in FIG. 14B, the bag body 31 partially dents in the contact region 49 so that the pedestrian-side wall portion 32 approaches the vehicle-body-side wall portion 33. Then, slack occurs in the longitudinal coupling portion 63 of the restricting member 62 disposed in the dented region, the pressed-contact portion 55 is extended outward, and the inflation gas G is discharged from the opening body 53 (see. FIGS. 14B and 15B).

That is, in the pedestrian airbag devices ML, MR of the embodiment, when the bag body 31 receives the pedestrian P upon completion of inflation of the airbag 30, slack occurs in the longitudinal coupling portion 63 of the restricting member 62 disposed between the pedestrian-side wall portion 32 and the vehicle-body-side wall portion 33, and the gas discharge portion 52 is opened to enable discharge of the inflation gas G. Thus, even with the configuration in which the gas discharge portion 52 is disposed on the outer peripheral edge side of the bag body 31, when the pedestrian P is received, the inflation gas G can be immediately discharged from the gas discharge portion 52, thereby enabling rapid and stable protection of the pedestrian P.

Therefore, in the pedestrian airbag devices ML, MR of the embodiment, even in the airbag 30 configured to complete inflation in proximity to vehicle-body-side members (front windshield 4, front pillars 5L, 5R), the inflation gas that has flowed inside can be smoothly exhausted.

In the pedestrian airbag devices ML, MR of the embodiment, the pressed-contact portion 55 is formed in a substantially cylindrical shape extending from the outer peripheral edge of the opening body 53. Therefore, upon completion of inflation of the airbag 30, it is possible to stably maintain a closed state of the gas discharge portion 52 (opening body 53), the closed state being achieved by a pressed-contact state of the cylindrical pressed-contact portion 55, in a state before the pedestrian P is received, that is, in a state where the pressed-contact portion 55 is drawn into the bag body 31 by the restricting member 62 (it is possible to suppress formation of a gap around the opening body 53 as much as possible). As a result, leakage of the inflation gas from the gas discharge portion 52 (opening body 53) can be accurately suppressed. If such points are not taken into consideration, the pressed-contact portion may not have a cylindrical shape and may have a configuration in which the edges of the pedestrian-side portion and the vehicle-body-side portion are not joined to each other (two pieces extending from the peripheral edge of the opening body). When the pressed-contact portion is configured as described above, the distal ends of the two lateral coupling portions of the restricting member are coupled substantially at central portions on the distal end sides of the pedestrian-side portion and the vehicle-body-side portion, respectively.

In the pedestrian airbag devices ML, MR of the embodiment, the distal ends 64a of the lateral coupling portions 64A, 64B of the restricting member 62 are coupled to the front edge portion 55aa and the rear edge portion 55ab on the distal end 55a side of the cylindrical pressed-contact portion 55. However, the coupling position of the lateral coupling portion is not limited to the embodiment. Even when the pressed-contact portion is cylindrical, the distal ends of the respective lateral coupling portions may be coupled at positions that are substantially central relative to the distal ends of the vehicle-body-side portion and the pedestrian-side portion of the pressed-contact portion, respectively. A coupling position of the distal end of the lateral coupling portion relative to the cylindrical pressed-contact portion may be selected as appropriate. When the distal ends of the lateral coupling portions are coupled at positions that are substantially central relative to the distal ends of the vehicle-body-side portion and the distal end of the pedestrian-side portion of the pressed-contact portion, respectively, stable drawing into the bag body is possible in a state before the pedestrian is received (gas leakage prevention performance is favorable). However, in such a configuration, protrusion to the outside of the bag body upon reception of the pedestrian may be slightly delayed. As in the embodiment, when the distal ends of the lateral coupling portions are coupled to the front edge side and the rear edge side on the distal end side of the pressed-contact portion, protrusion to the outside of the bag body upon receiving the pedestrian can be rapidly performed. However, in such a configuration, the drawing into the bag body in a state before pedestrian reception may be slightly less stable than the former configuration (the gas leakage prevention performance may be relatively less favorable). In consideration of such a point, it is preferable to set the coupling positions of the distal ends of the lateral coupling portions.

The present disclosure is suitable for a pedestrian airbag device including an airbag that inflates to come into contact with vehicle-body-side members such as a windshield and front pillars over a wide range. In the embodiment, a pedestrian airbag device capable of receiving a pedestrian P as a person to be protected has been described as an example of the airbag device. However, the airbag device according to the present disclosure is not limited to a pedestrian airbag device. For example, the present disclosure is also applicable to a side collision airbag device including an airbag that takes an occupant seated on a seat as a person to be protected and inflates in a substantially plate shape so as to cover the lateral side of the occupant on the vehicle outer side. As an airbag used in such a side collision airbag device, an airbag may be exemplified that is formed into a bag shape by coupling outer peripheral edges of two wall portions facing each other in a vehicle interior-exterior direction and includes two completely partitioned inflation regions. One inflation region is an upstream-side inflation portion that is inflatable by allowing inflation gas discharged from an inflator to flow thereinto, and the other inflation region is a downstream-side inflation portion into which the inflation gas is allowed to flow through a gas discharge portion that is opened upon contact between the upstream-side inflation portion and an occupant (person to be protected). In this airbag, the upstream-side inflation portion corresponds to the protective inflation portion in the present disclosure.

## Claims

1. An airbag device (ML, MR) mounted on a vehicle, the airbag device comprising
an airbag (30) that inflates to enable protection of a person to be protected (P),
wherein
the airbag includes
a protective inflation portion (31) formed in a bag shape and formed of a flexible sheet body, the protective inflation portion being capable of protecting a person to be protected upon completion of inflation,
a gas discharge portion (52) capable of discharging an inflation gas that has flowed into the protective inflation portion when the person to be protected is received, and
a restricting member (62) disposed in the protective inflation portion and capable of maintaining a closed state of the gas discharge portion in a state before reception of the person to be protected,
the protective inflation portion includes a proximal-side wall portion (32) disposed on a side of the person to be protected and a distal-side wall portion (33) disposed to face the proximal-side wall portion upon completion of inflation, and the protective inflation portion is formed into a bag shape by joining outer peripheral edges (32a,33a) of the proximal-side wall portion and the distal-side wall portion to each other,
the gas discharge portion includes
an opening body (53) formed to provide a gap in a part of an outer peripheral edge joint portion (35) constituting an outer peripheral edge (31a) of the protective inflation portion, and
a pressed-contact portion (55) that is formed to extend from a peripheral edge of the opening body and is capable of maintaining a closed state of the opening body upon completion of inflation of the protective inflation portion by being pressed into mutual contact by the inflation gas that has flowed into the protective inflation portion in a state where the pressed-contact portion is drawn into the protective inflation portion by the restricting member,
the restricting member is formed of an elongated body having flexibility, and includes
a longitudinal coupling portion (63) disposed to couple the proximal-side wall portion and the distal-side wall portion in a contact region of the person to be protected, and
a pair of lateral coupling portions (64A,64B) arranged to extend from a vicinity of a center of the longitudinal coupling portion toward the gas discharge portion, each of the lateral coupling portions having a distal end side joined to a distal end of the pressed-contact portion, and
in a state before reception of the person to be protected upon completion of the inflation of the protective inflation portion, a state in which the pressed-contact portion is drawn by each of the lateral coupling portions is maintainable, and the pressed-contact portion is extendable outward by causing slack in the longitudinal coupling portion upon contact with the person to be protected.

2. The airbag device (ML, MR) according to claim 1, wherein the pressed-contact portion (55) is formed in a substantially cylindrical shape extending from an outer peripheral edge of the opening body (53).

3. The airbag device (ML, MR) according to claim 2, wherein the lateral coupling portions (64A, 64B) of the restricting member (62) are joined respectively to vicinities of two end edges (55aa, 55ab) facing each other at a distal end portion (55a) of the cylindrical pressed-contact portion (55).

4. The airbag device (ML, MR) according to claim 1, wherein the airbag device is mounted near a rear end (8a) of a hood panel (8) of the vehicle to enable protection of a pedestrian as the person to be protected (P).

5. The airbag device (ML, MR) according to claim 4, wherein
the airbag (30) includes a cowl cover portion (46) that covers a rear end (8a) side of the hood panel (8) upon completion of inflation, and a pillar cover portion (47) that covers an upper surface side of a front pillar (5L) of the vehicle upon completion of inflation, and
the pillar cover portion is formed to extend rearward from an outer end portion of the cowl cover portion in a vehicle width direction upon completion of inflation, and the gas discharge portion (52) is disposed near a front end of the pillar cover portion.
